# EUROPEAN PATENT APPLICATION

(11) **EP 2 641 782 A1**
(43) Date of publication of application: **25.09.2013**
(21) Application number: 11841161.0
(22) Date of filing: 15.11.2011
(51) Int. Cl.: B60R 16/02, H01R 13/70, H02M 3/00

(54) **POWER SUPPLY CONTROL DEVICE**

(30) Priority: 18.11.2010 JP 2010258209
(71) Applicant: Yazaki Corporation, Minato-ku Tokyo 108-8333 (JP)
(72) Inventor: SATAKE Shuuji, Shizuoka (JP); KANAZAWA Akiyoshi, Shizuoka (JP)
(74) Representative: Grünecker, Kinkeldey, Stockmair & Schwanhäusser
(86) International application number: PCT/JP2011/076309
(87) International publication number: WO 2012/067116

(57) **Abstract**

The purpose of the present invention is to provide a power supply control device capable of conserving power and increasing the service life by eliminating wasteful supply of power. A switching element (51) is disposed between an alternator (4) and a load (3). A voltage detecting device (52) detects the inputted voltage (V_{IN}) which is the voltage supplied to the load (3) from the alternator (4). A power control device (53) intermittently turns on the switching element (51) and shortens the duty ratio, during which the switching element (51) is turned on, as the input voltage (V_{IN}) detected by means of the voltage detecting device (52) becomes larger.

## Description

### Technical Field

The invention relates to a power supply control device.

### Background Art

A vehicle such as automobile is mounted with a power supply device for feeding power to each load. For example, Patent Document 1 discloses a power supply device.

### Related Art Documents

### Patent Documents

[Patent Document 1] JP-A-2010-233366

### Summary of the Invention

### Problems to be Solved by the Invention

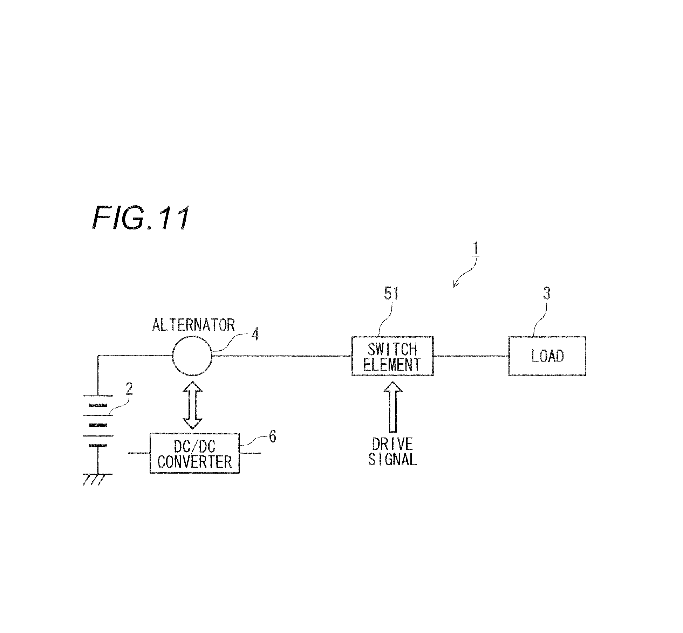

FIG. 11 shows an example of a power supply device of the related art. As shown in FIG. 11, a power supply device 1 has a switch element 51 that is provided between a battery 2 serving as a power supply and a load 3 and a control device (not shown) serving as an on-off control unit that turns on-off the switch element 51.

As the switch element 5, a mechanical relay or semiconductor relay is used. The control device (not shown) outputs a drive signal to the switch element 51 to thus turn on-off the switch element 51. According to the power supply device 1 shown in FIG. 11, when the control device (not shown) turns on the switch element 51, power from the battery 2 is fed to the load 3, and when the control device (not shown) turns off the switch element 51, the power that is fed from the battery 2 to the load 3 is interrupted.

Also, the automobile is mounted with an alternator 4 serving as a generator that converts mechanical energy of an engine into electric energy to charge the battery 2. The alternator 4 may be provided between the battery 2 and the load 3 so that the power generated by the alternator 4 can be directly fed to the load. Also, when the battery 2 is a 48V system and the load 3 is a 12V system, a DC/DC converter 6 that drops a power supply voltage from the battery 2 may be provided between the battery 2 and the load 3.

In the meantime, a rated voltage is defined for the load 3. Even when a voltage of the rated voltage or higher is applied, a function of the load 3 is not improved. Therefore, when a voltage of the rated voltage or higher is supplied to the load 3, a wasteful voltage is supplied. Also, when the voltage that is supplied to the load 3 is increased, electrical stress to the load 3 is also increased, so that the service life may be shortened (actually, it is known that when a voltage exceeds the rated voltage in a lamp such as filament, the service life is shortened).

Therefore, the voltage that is output from the alternator 4 or DC/DC converter 6 may be lowered to the rated voltage of the load 3 so that there is no waste. However, it is impossible to lower the voltage, which is output from the alternator 4 and the like, to the rated voltage. The reason is as follows. In the automobile, power regeneration that charges the battery 2 by the alternator 4 and the like is performed so as to improve the mileage. In the power regeneration, when a voltage of the battery 2 is 12V, for example, it is necessary to increase the voltage that is output from the alternator 4 and the like to 14V higher than 12V. Also, in the vehicle, a voltage higher than 14V may be output. Therefore, when the voltage that is output from the alternator 4 and the like is lowered to the rated voltage, the battery 2 cannot be charged.

Therefore, an object of the invention is to provide a power supply control device capable of conserving power and increasing a service life thereof by eliminating wasteful feed of power.

### Means for Solving the Problems

In order to achieve the above object, the invention provides a power supply control device including a switch element that is provided between a power supply and a load, an on-off control section that controls to turn on and off the switch element, and a voltage detecting section that detects a voltage supplied from the power supply to the load. The on-off control section controls to turn on the switch element intermittently and shortens a duty ratio of an on-time period of the switch element in accordance with an increase of the supplied voltage detected by the voltage detecting section.

Also, the invention provides the power supply control device wherein the on-off control section controls to turn on the switch element always when the supplied voltage detected by the voltage detecting section is a predetermined value or smaller and controls to turn on the switch element intermittently when the supplied voltage exceeds the predetermined value.

Also, the invention provides the power supply control device further including an alternator or a DC/DC converter that is connected in parallel with the power supply, wherein the switch element is provided closer to the load than the alternator or the DC/DC converter.

Also, the invention provides the power supply control device further including a connector having a plurality of terminal fittings and a connector housing that accommodates therein the plurality of terminal fittings, wherein the switch element, the on-off control section and the voltage detecting section are accommodated in the connector housing with being connected to the terminal fittings.

### Advantageous Effects of the Invention

As described above, according to the invention, the on-off control section intermittently turns on the switch element and shortens the duty ratio of an on-time period, during which the switch element is turned on, as the supplied voltage detected by the voltage detecting section becomes larger. That is, as the supplied voltage is increased, the on-time period of the switch element is shortened, so that the power is suppressed to be constant. Thereby, the predetermined wasteful power or more is not fed, so that it is possible to conserve the power and to increase the service life.

Also, according to the invention, since the on-off control section always turns on the switch element when the supplied voltage detected by the voltage detecting section is a predetermined value or smaller and intermittently turns on the switch element when the supplied voltage exceeds the predetermined value, it is possible to utilize the function of the load to the utmost.

Also, according to the invention, the alternator or DC/DC converter that is connected in parallel with the power supply is further provided and the switch element is provided closer to the load-side than the alternator or DC/DC converter. Therefore, when the alternator is used, since engine load is reduced, it is possible to conserve the power by the power generation torque reduction of the alternator and to reduce the fuel consumption. Also, when the DC/DC converter is used, it is possible to reduce the output power and the consumption of the battery.

Also, according to the invention, since the switch element, the voltage detecting section and the on-off control section are provided in the connector, it is possible to simply attach the power supply device.

### Brief Description of the Drawings

FIG. 1(A) is a circuit diagram showing a first illustrative embodiment of a power supply device having incorporated a connector serving as the power supply control device of the invention and FIG. 1(B) is a detailed circuit diagram of the connector shown in FIG. 1(A).
FIG. 2(A) is a perspective view showing an outward appearance of the connector shown in FIG. 1(B) and FIG. 2(B) is a sectional view taken along a line II(B)-II(B) of FIG. 2(A).
FIG. 3 is a flowchart of a power control device that configures the power supply device shown in FIGS. 1(A) and 1(B).
FIG. 4(A) is a time chart of an input voltage of the connector that configures the power supply device shown in FIGS. 1(A) and 1(B) and FIG. 4(B) is a time chart of an output voltage of the connector that that configures the power supply device shown in FIGS. 1(A) and 1(B).
FIG. 5 is a graph showing power, which is fed to a load, relative to the input voltage of the connector.
FIG. 6 is a sectional view of the connector shown in FIGS. 1(A) and 1(B) in another illustrative embodiment.
FIG. 7 is a circuit diagram showing a second illustrative embodiment of a power supply device having incorporated a connector serving as the power supply control device of the invention.
FIG. 8 is a sectional view of the connector shown in FIG. 7.
FIG. 9 is a flowchart of a power control device that configures the power supply device shown in FIG. 7.
FIGS. 10(A) to 10(C) are circuit diagrams showing embodiments of a power supply device having incorporated a connector serving as the power supply control device of the invention in another illustrative embodiment.
FIG. 11 is a circuit diagram showing an example of a power supply device of the related art.

### Mode for Carrying out the Invention

### First Illustrative Embodiment

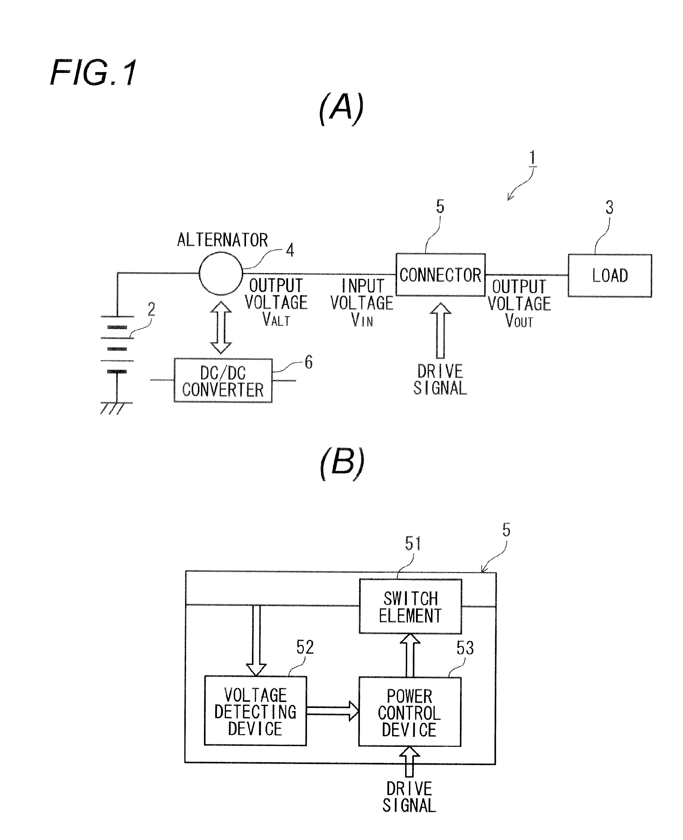

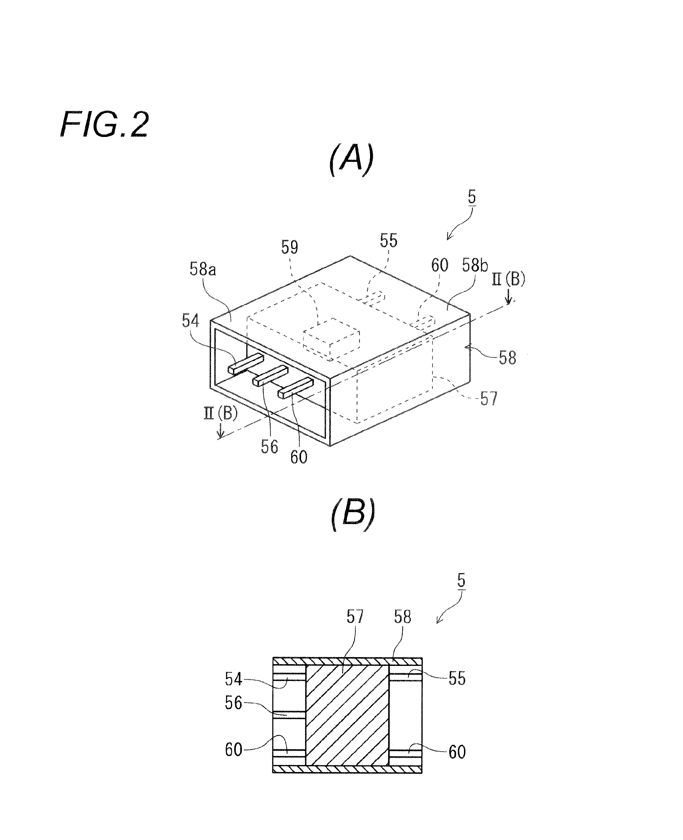

Hereinafter, the power supply control device of the invention will be described with reference to the drawings. FIG. 1(A) is a circuit diagram showing a first illustrative embodiment of a power supply device having incorporated a connector serving as the power supply control device of the invention and FIG. 1(B) is a detailed circuit diagram of the connector shown in FIG. 1(A). FIG. 2(A) is a perspective view showing an outward appearance of the connector shown in FIG. 1(B) and FIG. 2(B) is a sectional view taken along a line II(B)-II(B) of FIG. 2(A).

The power supply device 1 is mounted on an ICEV (Internal Combustion Engine Vehicle). As shown in FIGS. 1(A) and 1(B), the power supply device 1 has a battery 2 serving as a power supply, a load 3 that operates as power from the battery 2 and the like is fed thereto, an alternator 4 that is provided between the battery 2 and the load 3, a power supply control device that controls power feeding to the load 3 and a connector 5.

As the battery 2, a secondary battery such as lithium battery is used in addition to a lead battery. The load 3 is a load such as lamp and electric motor that is mounted on a vehicle. The alternator 4 is a generator that converts mechanical energy of an engine into electric energy, charges the battery 2 and directly feeds power to the load 3. Instead of the alternator 4, a DC/DC converter 6 that drops a voltage from the battery 2 may be connected between the battery 2 and the load 3. Here, the configuration where the alternator 4 is connected is described.

The connector 5 is provided closer to the load 3 than the alternator 4 between the battery 2 and the load 3, so that it starts the power feeding to the load in response to an output of a drive signal from an outside and interrupts the power feeding to the load in response to an output stop of the drive signal from the outside.

As shown in FIG. 1(B), the connector 5 has a switch element 51 that is provided between the alternator 4 and the load 3, a voltage detecting device 52 serving as a voltage detecting section that detects an input voltage V_{IN} of the switch element 51, which is a voltage to be supplied to the load 3, and a power control device 53 serving as an on-off control section that turns on-off the switch element 51 based on the drive signal from the outside and a detection result of the voltage detecting device 52.

The switch element 51 consists of a semiconductor relay and the like, for example. When the switch element is turned on, it feeds the power from the alternator 4 to the load 3, and when the switch element is turned off, it interrupts the power feeding to the load 3 from the alternator 4.

The voltage detecting device 52 consists of an OP amplifier and the like, for example, and supplies the detected input voltage V_{IN} to the power control device 53 that will be described later. The input voltage V_{IN} is substantially the same as an output voltage VALT from the alternator 4. The power control device 53 consists of a well-known microcomputer and the like, for example, and controls the entire power supply device 1.

Also, as shown in FIGS. 2(A) and 2(B), the connector 5 has a power supply-side terminal fitting 54 to which an electric wire of the alternator 4-side is connected, a load-side terminal fitting 55 to which an electric wire of the load 3-side is connected, a terminal fitting 56 for communication to which a drive signal is supplied from the outside, two ground terminals 60 of a power supply-side and a load-side, a sealing member 57 and a connector housing 58 that accommodates therein the terminal fittings 54 to 56 and the sealing member 57.

The power supply-side terminal fitting 54 is made of conductive metal and has one end that is inserted in the sealing member 57 (which will be described later) and the other end that protrudes from one of a pair of opposite surfaces of the sealing member 57. The load-side terminal fitting 55 is made of conductive metal and has one end that is inserted in the sealing member 57 (which will be described later) and the other end that protrudes from the other of the pair of opposite surfaces of the sealing member 57.

The terminal fitting 56 for communication is made of conductive metal and has one end that is inserted in the sealing member 57 (which will be described later) and the other end that protrudes from the one of the pair of opposite surfaces of the sealing member 57. The ground terminals 60 are made of conductive and have one ends that are inserted in the sealing member 57 (which will be described later) and the other ends that protrude from both of the pair of opposite surfaces of the sealing member 57. The sealing member 57 resin-seals a chip 59, on which the switch element 51, the voltage detecting device 52 and the power control device 53 are mounted, and the one ends of the terminal fittings 54 to 56 with the chip and the one ends being wiring-bonded and connected each other.

The connector housing 58 accommodates therein the terminal fittings 54 to 56, 60 and the sealing member 57. The housing 58 has a flat rectangular box shape, and the power supply-side terminal fitting 54, the terminal fitting 56 for communication and the one sides of the two ground terminals 60 are exposed through openings at one side thereof and the load-side terminal fitting 55 and the other sides of the two ground terminals 60 are exposed through openings at the other side thereof. Also, the connector housing 58 is provided at one side of a longitudinal direction thereof with a hood part 58a to which a housing of a power supply-side connector, which is attached to an electric wire terminal of the alternator 4-side, and a communication connector, which is attached to a terminal of a communication line to which the drive signal is transmitted, is obtained and fitted. When the housing of the power supply-side connector and the communication connector is fitted into the hood part 58a, terminal fittings of the power supply-side connector and the communication connector are connected to the terminal fittings 54, 56.

Also, the connector housing 58 is provided at the other side of the longitudinal direction thereof with a hood part 58b to which a housing of a load-side connector, which is attached to an electric wire terminal of the load 3-side, is obtained and fitted. When the housing of the load-side connector is fitted into the hood part 58b, a terminal fitting of the load-side connector is connected to the terminal fitting 55.

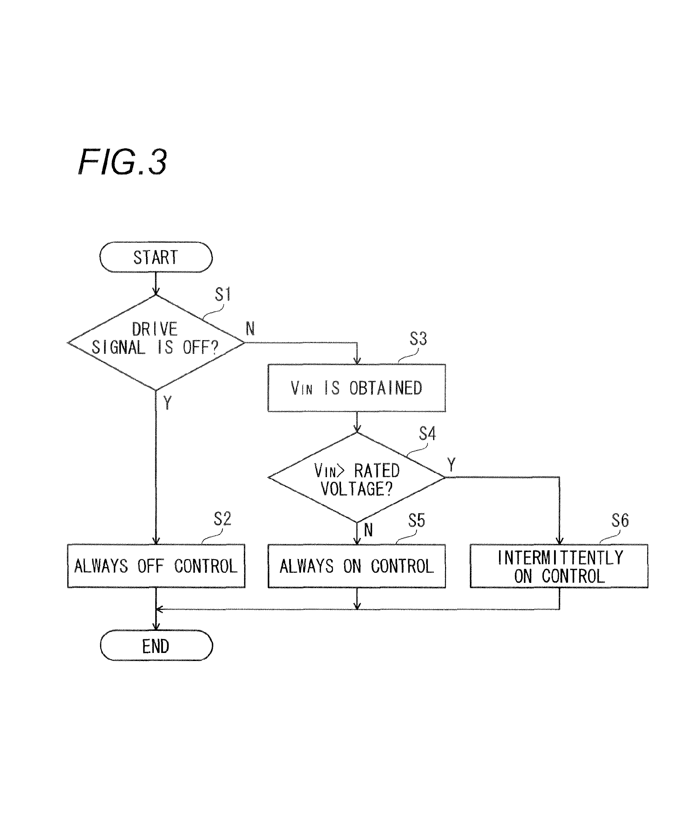

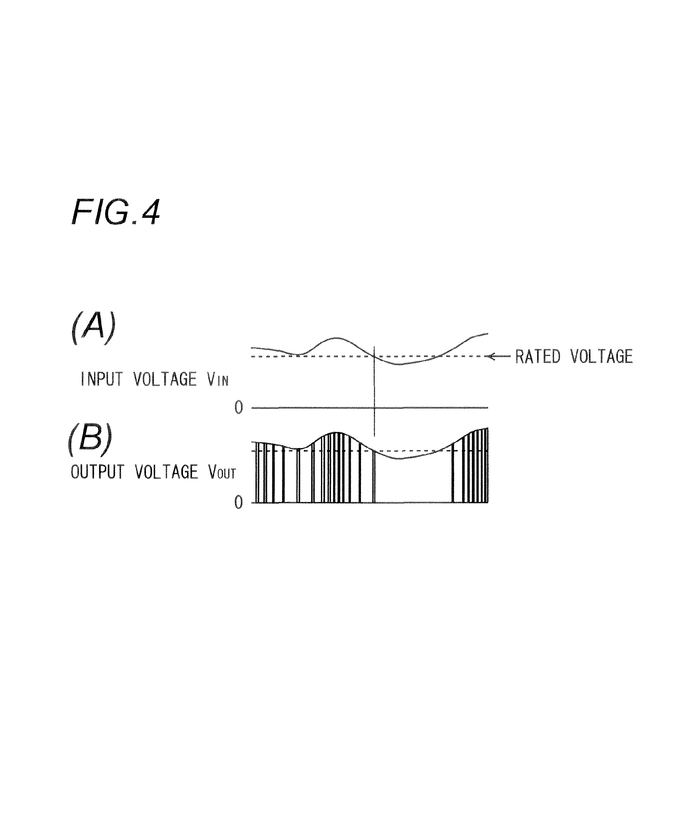

In the below, operations of the power supply device 1 having the above-described configuration are described with reference to FIGS. 3, 4(A) and 4(B). FIG. 3 is a flowchart of the power control device 53 that configures the power supply device 1 shown in FIGS. 1(A) and 1(B). FIG. 4(A) is a time chart of an input voltage of the connector 5 that configures the power supply device 1 shown in FIGS. 1(A) and 1(B) and FIG. 4(B) is a time chart of an output voltage of the connector 5 that that configures the power supply device 1 shown in FIGS. 1(A) and 1(B).

First, the power control device 53 starts an operation thereof as a drive signal is input from the outside. First of all, the power control device 53 determines whether the drive signal from the outside is off (step S1), When the drive signal is off (Y in step S1), the power control device 53 stops an output of a control signal to the switch element 51 to thus always turn off the switch element 51 (step S2) and then ends the processing. To the contrary, when the drive signal is not off (N in step S1), the power control device 53 returns to step S3.

In step S3, the power control device 53 obtains the input voltage V_{IN} detected by the voltage detecting device 52. Then, the power control device 53 determines whether the input voltage V_{IN} obtained in step S3 exceeds a rated voltage (predetermined value) (step S4).

When the input voltage V_{IN} is the rated voltage or lower (N in step S4), the power control device 53 outputs a control signal that always turns on the switch element 51 (step S5) and then ends the processing.

On the other hand, when the input voltage V_{IN} exceeds the rated voltage (Y in step S4), the power control device 53 outputs a pulse-shaped control signal that intermittently turns on the switch element 51 without always turning on the switch element (step S6) and then ends the processing. In step S6, the power control device 53 shortens a duty ratio of an on-time period, during which the switch element 51 is turned on, as the input voltage V_{IN} becomes larger. Here, the duty ratio of an on-time period is (a time period during which the switch element 51 is turned on)/(a cycle during which the switch element 51 is turned on).

According to the above operations, as shown in FIGS. 4(A) and 4(B), while the input voltage V_{IN} is the rated voltage or lower, the power is always fed to the load 3. When the input voltage V_{IN} exceeds the rated voltage, the power is intermittently fed to the load 3. At this time, as the input voltage V_{IN} becomes larger, the duty ratio of an on-time period becomes smaller.

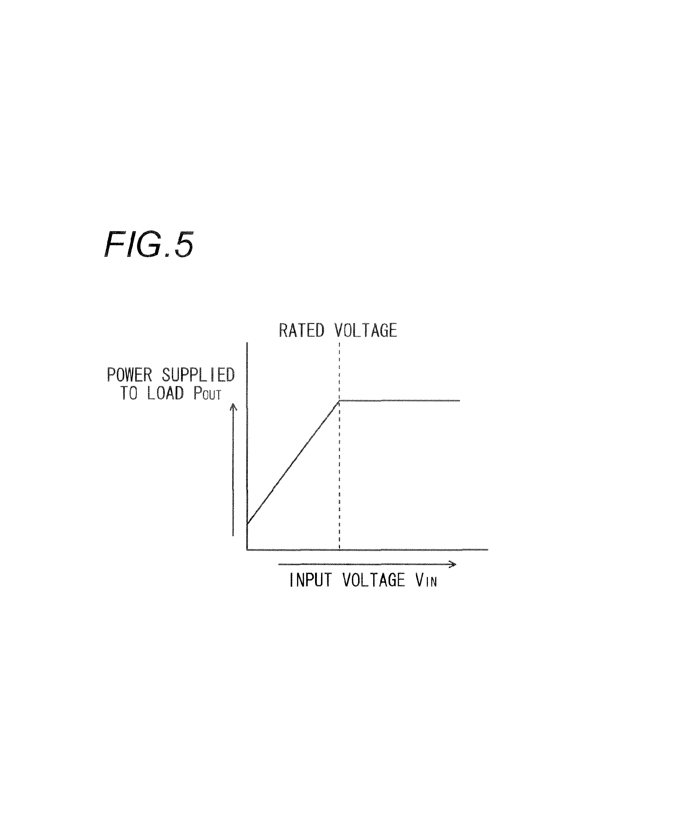

Therefore, a relation between the input voltage V_{IN} and the power P_{OUT} to be fed to the load 3 is as shown in FIG. 5. That is, while the input voltage V_{IN} is lower than the rated voltage, since the switch element 51 is always turned on by the power control device 53, the power is also increased as the input voltage V_{IN} is increased. When the input voltage V_{IN} exceeds the rated voltage, since the switch element 51 is intermittently turned on by the power control device 53 and the on-time period is shortened as the input voltage V_{IN} is increased, it is possible to suppress the power P_{OUT} constant.

According to the above connector 5, the power control device 53 intermittently turns on the switch element 51 and shortens the duty ratio of an on-time period, during which the switch element 51 is turned on, as the input voltage V_{IN} detected by the voltage detecting device 52 becomes larger. That is, as the input voltage V_{IN} is increased, the on-time period of the switch element 51 is shortened, so that the power is suppressed to be constant (for example, to the rated voltage). Thereby, the predetermined wasteful power or more is not fed, so that it is possible to conserve the power and to increase the service life.

Also, according to the above connector 5, since the power control device 53 always turns on the switch element 51 when the input voltage V_{IN} detected by the voltage detecting device 52 is the rated voltage or lower and intermittently turns on the switch element 51 when the input voltage V_{IN} exceeds the rated voltage, it is possible to utilize the function of the load 3 to the utmost.

Also, according to the above connector 5, the alternator 4 or DC/DC converter 6 that is connected in parallel with the battery 2 is further provided and the switch element 51 is provided closer to the load 3-side than the alternator 4 or DC/DC converter 6. Therefore, when the alternator 4 is used, since engine load is reduced, it is possible to conserve the power by the power generation torque reduction of the alternator 4 and to reduce the fuel consumption. Also, when the DC/DC converter 6 is used, it is possible to reduce the output power and the consumption of the battery.

Also, according to the above connector 5, since the switch element 51, the voltage detecting device 52 and the power control device 53 are provided in the connector 5, it is possible to simply attach the power supply device 1.

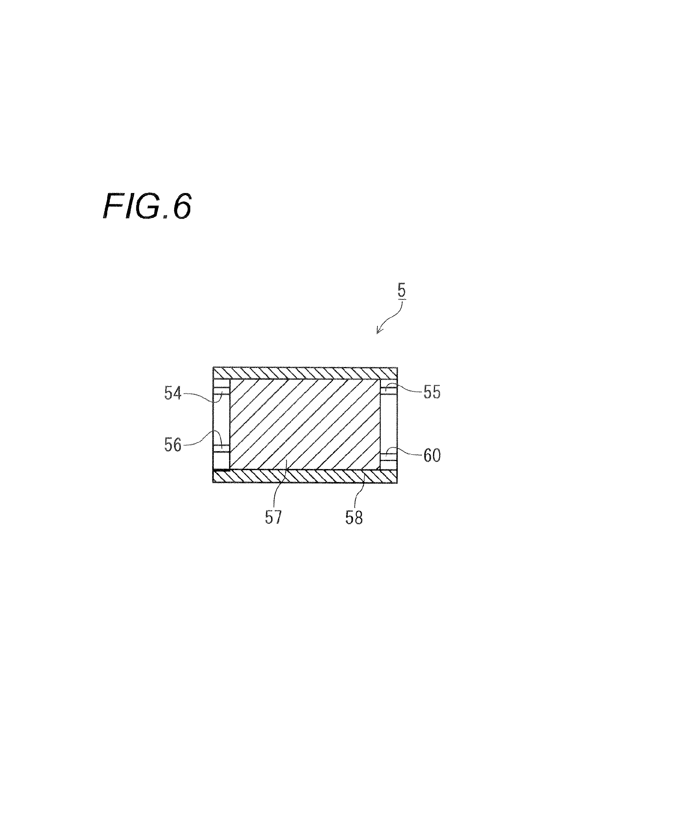

According to the first illustrative embodiment, the ground terminals 60 are provided at the load-side and the power supply-side and the ground signals are acquired from both the load-side and the power supply-side. However, the invention is not limited thereto. For example, as shown in FIG. 6, the ground terminal 60 may be provided at the load-side only and the ground signal may be acquired from the load-side only.

### Second Illustrative Embodiment

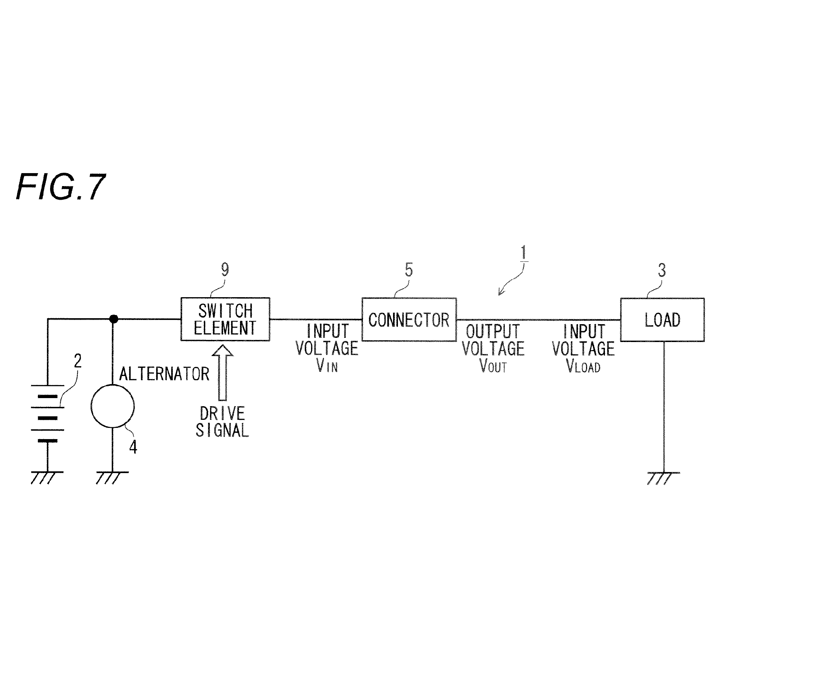

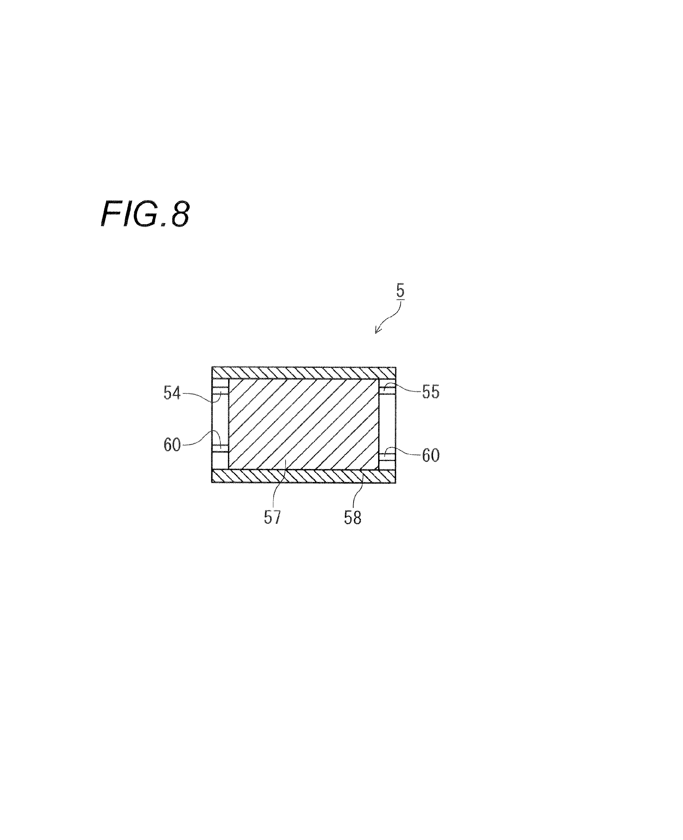

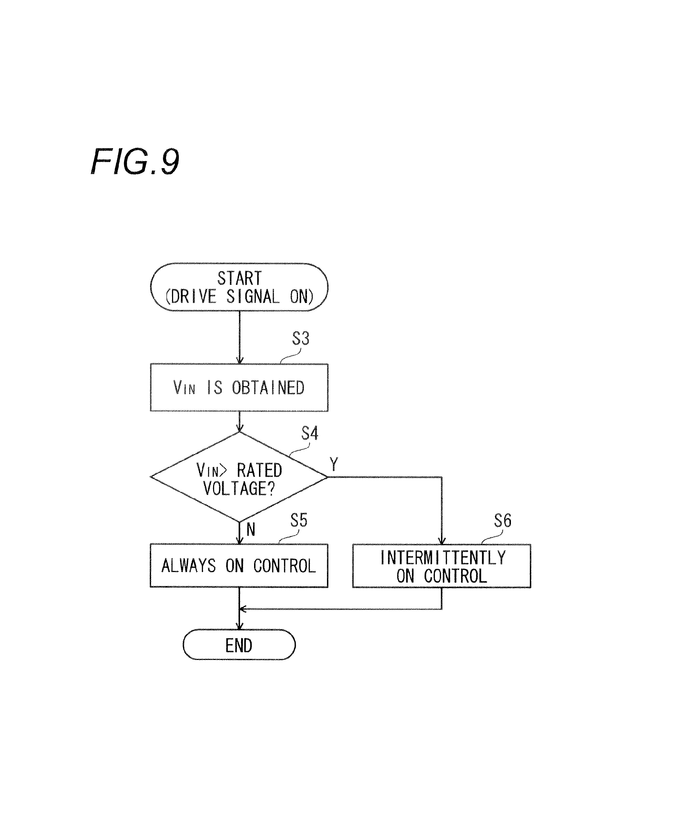

In the below, a power supply control device of a second illustrative embodiment will be described with reference to FIGS. 7 to 9. FIG. 7 is a circuit diagram showing a second illustrative embodiment of a power supply device having incorporated a connector serving as the power supply control device of the invention. FIG. 8 is a sectional view of the connector shown in FIG. 7. FIG. 9 is a flowchart of a power control device that configures the power supply device shown in FIG. 7. In FIG. 7, the equivalent parts to those of the first illustrative embodiment shown in FIGS. 1(A) and 1(B) are denoted with the same reference numerals and the descriptions thereof are omitted. Also, in FIG. 9, the equivalent steps to those of the first illustrative embodiment shown in FIG. 3 are denoted with the same reference numerals and the descriptions thereof are omitted.

In the above illustrative embodiment, the connector 5 turns on-off the load 3 and performs the duty control in response to the input voltage V_{IN}. However, the invention is not limited thereto. For example, as shown in FIG. 7, a switch element 9 may be provided between the battery 2 or alternator 4 and the connector 5, the switch element 9 may turn on-off the load 3 and the connector 5 may perform the duty control.

The switch element 9 consists of a mechanical relay, a semiconductor relay or the like, for example, and is turned on in response to an output of a drive signal from the outside to thus start the power feeding to the load 3 or the voltage detecting device 52 or power control device 53 embedded in the connector 5 and is turned off in response to the output stop of the drive signal from the outside to thereby interrupt the power feeding to the load 3 or the voltage detecting device 52 or power control device 53 embedded in the connector 5.

In the connector 5, the drive signal is not input to the power control device 53, unlike the first illustrative embodiment. Therefore, as shown in FIG. 8, the connector 5 is not provided with the terminal fitting 56 for communication, unlike the first illustrative embodiment.

In the below, operations of the power supply device having the above-described configuration according to the second illustrative embodiment are described with reference to a flowchart shown in FIG. 9. First, when a drive signal is input from the outside, the switch element 9 is turned on, so that the power feeding to the voltage detecting device 52 or power control device 53 starts and the power control device 53 starts the operations thereof.

In the first illustrative embodiment, the power control device 53 checks the drive signal state in step S1. In the second illustrative embodiment, however, the power control device directly proceeds to steps S3 to S6 without performing the operations of steps S1 and S2. Since the operations of steps S3 to S6 have been already described in the first illustrative embodiment, the detailed descriptions thereof are here omitted.

Also in the second illustrative embodiment, as shown in FIG. 8, the ground terminals 60 are provided at the load-side and the power supply-side and the ground signals are acquired from both the load-side and the power supply-side. However, like the first illustrative embodiment, the ground signal may be acquired from the load-side only (i.e., the ground terminal 60 of the power supply-side is not necessary).

Meanwhile, in the first and second illustrative embodiments, the predetermined value is set to be the rated voltage of the load 3. However, the invention is not limited thereto. The predetermined value may be set to be the rated voltage or lower of the load 3 and may be set to be a value slightly smaller than the rated voltage.

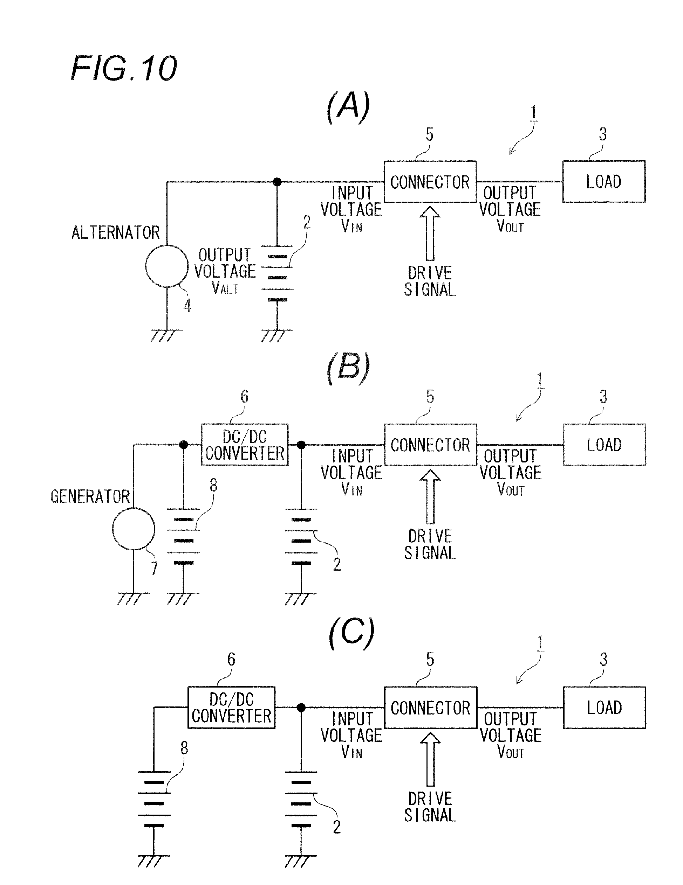

Also, in the first and second illustrative embodiments, the alternator 4 is provided between the battery 2 and the load 3. However, the invention is not limited thereto. The alternator 4 may be connected in parallel with the battery 2. Although there is the power supply device 1 having a configuration shown in FIG. 10(A) depending on the ICEV, the alternator can be also applied to the configuration.

Also, in the above illustrative embodiments, the DC/DC converter 6 is provided between the battery 2 and the load 3. However, the invention is not limited thereto. The DC/DC converter 6 may be connected in parallel with the battery 2. As shown in FIG. 10(B), the DC/DC converter can be also applied to an HEV (Hybrid Electric Vehicle) and PHEV (Plug-In Hybrid Electric Vehicle) having the power supply device 1 mounted thereto in which two batteries 2, 8 and a generator 7 are provided. Also, as shown in FIG. 10(C), the DC/DC converter can be also applied to a BEV (Battery Electric Vehicle) or FCEV (Fuel Cell Electric Vehicle) having the power supply device 1 mounted thereto in which two batteries 2, 8 are provided.

FIGS. 10(A) to 10(C) show the configurations that are applied to the first illustrative embodiment. However, the configurations may be also applied to the second illustrative embodiment.

The above illustrative embodiments just show the representative modes of the invention and the invention is not limited to the illustrative embodiments. That is, a variety of changes can be made without departing from the gist of the invention.

Although the invention has been specifically described with reference to the specific illustrative embodiments, it is apparent to one skilled in the art that a variety of changes and modifications can be made without departing from the spirit and scope of the invention.

This application is based on Japanese Patent Application No. 2010-258209 filed on November 18, 2010, the disclosures of which are incorporated herein by reference.

### Industrial Applicability

According to the power supply control device, the on-time period of the switch element is shortened as the supplied voltage becomes larger, so that the power can be suppressed to be constant. Thereby, the predetermined wasteful power or more is not fed, so that it is possible to conserve the power and to increase the service life.

### Description of Reference Numerals and Signs

2: battery (power supply)
3: load
4: alternator
5: connector (power supply control device)
6: DC/DC converter
51: switch element
52: voltage detecting device (voltage detecting section)
53: power control device (on-off control section)

## Claims

1. A power supply control device comprising:
a switch element that is provided between a power supply and a load;
an on-off control section that controls to turn on and off the switch element; and
a voltage detecting section that detects a voltage supplied from the power supply to the load,
wherein the on-off control section controls to turn on the switch element intermittently and shortens a duty ratio of an on-time period of the switch element in accordance with an increase of the supplied voltage detected by the voltage detecting section.

2. The power supply control device according to claim 1, wherein the on-off control section controls to turn on the switch element always when the supplied voltage detected by the voltage detecting section is a predetermined value or smaller and controls to turn on the switch element intermittently when the supplied voltage exceeds the predetermined value.

3. The power supply control device according to claim 1 or 2, further comprising:
an alternator or a DC/DC converter that is connected in parallel with the power supply,
wherein the switch element is provided closer to the load than the alternator or the DC/DC converter.

4. The power supply control device according to claim 1, further comprising a connector having a plurality of terminal fittings and a connector housing that accommodates therein the plurality of terminal fittings,
wherein the switch element, the on-off control section and the voltage detecting section are accommodated in the connector housing with being connected to the terminal fittings.
